# EUROPEAN PATENT SPECIFICATION

(11) **EP 1 005 144 B1**
(45) Date of publication and mention of the grant of the patent: **06.06.2007**
(21) Application number: 98122273.0
(22) Date of filing: 24.11.1998
(51) Int. Cl.: H02K 49/04

(54) **Permanent magnet type eddy current retarder**
Permanentmagneterregte Wirbelstrombremse
Ralentisseur à courant de Foucault du type à aimants permanents

(43) Date of publication of application: 31.05.2000
(73) Proprietor: Isuzu Motors Limited, Tokyo 140-8524 (JP)
(72) Inventor: Kuwahara, Tohru c/o Isuzu Motors Limited, Kawasaki-shi, Kanagawa (JP)
(74) Representative: Niedmers, Ole

(56) References cited:
- EP-A- 0 415 308
- EP-A- 0 777 316
- EP-A- 0 860 934
- US-A- 5 064 029
- PATENT ABSTRACTS OF JAPAN vol. 98, no. 9, 31 July 1998 & JP 10 098867 A (HITACHI METALS LTD), 14 April 1998
- PATENT ABSTRACTS OF JAPAN vol. 95, no. 1, 28 February 1995 & JP 06 292353 A (ISUZU MOTORS LTD), 18 October 1994
- PATENT ABSTRACTS OF JAPAN vol. 98, no. 10, 31 August 1998 & JP 10 127039 A (ISUZU MOTORS LTD), 15 May 1998
- PATENT ABSTRACTS OF JAPAN vol. 96, no. 1, 31 January 1996 & JP 07 245933 A (ISUZU MOTORS LTD), 19 September 1995
- PATENT ABSTRACTS OF JAPAN vol. 16, no. 280 (E-1221), 23 June 1992 & JP 04 069046 A (ISUZU MOTORS LTD), 4 March 1992

## Description

The present invention relates to an eddy current reduction apparatus, comprising a brake drum coupled to a rotational shaft, a guide tube having a hollow portion of rectangular in section, one end of said guide tube being secured to a vehicle body, the other end of said guide tube being projected into the brake drum, and a magnet supporting tube axially movably supported on the hollow portion of said guide tube and having a number of magnets coupled to an outer peripheral surface at equal intervals with spaces there between.

In PATENT ABSTRACTS OF JAPAN vol. 98, no. 9,31 July 1998 (1998-07-31) & JP 10 098867 A (HITACHI METALS LTD), 14 April 1998, there is disclosed an apparatus of the same general type as the same subject matter mentioned before, comprising a tubular element, having regions between permanent magnets of austenite-based steel with soft magnetic parts.

In a conventional permanent magnet type eddy current reduction apparatus disclosed in Fig. 1 of Japanese Patent Application Laid-Open NO. 3-86061 (see also EP 0 415 308 A2), a magnet supporting tube is accommodated in a hollow portion of a guide tube constituting a protective casing for permanent magnets (hereinafter merely referred to as magnets), the magnet supporting tube is projected into a brake drum in braking, and the magnet is communicated with ferromagnetic plates (pole pieces) on the guide tube to form a magnetic circuit between the guide tube and the brake drum. When the rotating brake drum crosses a magnetic field, an eddy current is generated in the brake drum, and a brake torque is generated in a direction reverse to the rotating direction of the brake drum.

However, the aforementioned eddy current reduction apparatus, has a problem in that since the magnetic flux passes through the thick ferromagnetic plate, the magnetic flux arriving at the brake drum is reduced, and the brake force lowers. The lowering in brake force is remarkable for those in which material for the brake drum has a large electric conductance. Further, in the conventional eddy current reduction apparatus, since the ferromagnetic plates are coupled to the guide tube, the constitution thereof becomes complicated, the manufacturing cost increases, and the weight also increases.

In a conventional permanent magnet type eddy current reduction apparatus disclosed in Fig.1 of Japanese Patent Application No. 7-336180 (see also EP 0 777 316 A1), there is provided a construction in which a non-magnetic (for example, austenite stainless steel) sheet is used for a tubular element on a guide tube opposed to an inner peripheral surface of a brake drum to reduce weight of the guide tube, and entry of dust or muddy water from outside is prevented. However, even the aforementioned permanent magnet type eddy current reduction apparatus, the air gap between the inner peripheral surface of the brake drum and the guide tube (strictly, air gap between the inner peripheral surface of the brake drum and the outer surface of the magnets) is so large that the brake force lowers.

### SUMMARY OF THE INVENTION

For solving the above-described problem the apparatus comprises in which a tubular element on said guide tube opposed to an inner peripheral surface of said brake drum is formed by a soft-magnetic material 1 sheet, and that the thickness of the portion covering said space between said magnets of the tubular element on said guide tube is thinner than that of the portion covering the outer surface of said magnets.

In case the tubular element on the guide tube opposed to an inner peripheral surface of the brake drum is constituted of a soft-magnetic steel sheet, a short-circuiting magnetic flux leakage passing through the steel sheet occurs between the magnets adjacent to each other. For suppressing such a magnetic flux leakage as described, a soft-magnetic (for example, such as SPCC, SPHC, SS41, etc.) is used for the tubular element on the guide tube opposed to an inner peripheral surface of the brake drum so that the magnetic flux may easily enter the brake drum, and a substantial air gap between the inner peripheral surface of the brake drum and the tubular element on the guide tube is made small to improve the brake force. Also in this case, however, since a short-circuiting magnetic flux leakage passing through the steel sheet occurs between the magnets adjacent to each other, the brake force is less improved. Then, it is necessary to wide the space between the magnets, or to make the steel sheet extremely thin.

In the present invention, as the first means for further enhancing the brake force, the thickness of the sheet covering the space between the magnets of the tubular element on the guide tube is made thinner than that of the sheet of the portion covering the outer surface of the magnets, and a non-magnetic (stainless, aluminum, etc.) reinforcing plate is coupled to the thinned portion by welding.

As the second means, a soft-magnetic sheet is used for the portion covering the outer surface of the tubular element on the guide tube, and a non-magnetic sheet is used for the portion covering the space between the magnets of the tubular element on the guide tube, both the sheets being connected by welding.

As the third means, the whole tubular element on the guide tube opposed to the inner peripheral surface of the brake drum is formed from a soft-magnetic sheet. A sheet formed of nickel, a nickel-chrome alloy, etc. is placed on the sheet covering the space between the magnets of the tubular element. Alternatively, a sheet is plated in advance with nickel or nickel-chrome alloy. By heated to a temperature of 1000°C or more, the nickel or nickel-chrome alloy is locally diffused over the sheet into a nickel alloy or a nickel-chrome alloy to provide an austenite tissue, and the sheet of the portion covering the spaces between the magnets are formed into a non-magnetic substance.

As the fourth means, the whole tubular element on the guide tube is formed from a stainless steel sheet having an austenite tissue, and only the portion covering the outer surface of the magnets are hammered and changed into a magnetic substance having a martensite tissue.

### BRIEF DESCRIPTION OF THE DRAWINGS

These and other objects and features of the invention will become more apparent upon a perusal of the following description taken in conjunction with the accompanying drawings wherein:
FIG. 1 is a side sectional view showing main parts of a permanent magnet type eddy current reduction apparatus according to the present invention.
FIG. 2 is a front sectional view showing main parts of the permanent magnet type eddy current reduction apparatus, taken on line 2A-2A of FIG. 1.
FIG. 3 is a front sectional view showing main parts of a permanent magnet type eddy current reduction apparatus according to a second embodiment of the present invention.
FIG. 4 is a front sectional view showing main parts of a permanent magnet type eddy current reduction apparatus according to a third embodiment of the present invention.
FIG. 5 is a front sectional view showing main parts of a permanent magnet type eddy current reduction apparatus according to a fourth embodiment of the present invention.

### DESCRIPTION OF THE PREFERRED EMBODIMENTS

In the eddy current reduction apparatus, a proximal end portion or a right end portion of a brake drum 15 provided with cooling fins 15a is coupled by welding or the like to a number of spokes 16 radially extending from a peripheral edge portion of a disk-like mounting flange 19 which is rotatably coupled to an output shaft of a speed change gear for vehicles, for example. A conical portion 13 is formed on the extreme end portion or the left end portion of the brake drum 15 so that heat inside the brake drum 15 is smoothly radiated.

For example, a guide tube B fixedly supported on the wall portion of the speed change gear for vehicles has a hollow portion 20 having a rectangular section, a right half portion of which is projected into the brake drum 15 leaving a slight clearance. More specifically, the guide tube B is composed of a main body 6 in C-shape in section formed of a ferromagnetic material such as iron, a thin tubular element 14 formed of a non-magnetic material opposed to the inner peripheral surface of the brake drum 15 and an end wall 6d. The main body 6 is integrally provided with an end wall 6b, an outer tubular portion 6a having substantially the same wall thickness as that of the brake drum, and an inner tubular portion 6c. An end wall 6d (preferably, a non-magnetic material or a soft-magnetic material) formed from an annular plate is coupled to the right end of the main body 6. The outer tubular portion 6a is formed on the right end thereof with a conical surface 31 opposed to the conical portion 13 of the brake drum 15.

According to the present invention, for making the guide tube B into a sealed construction, the tubular element 14 opposed to the inner peripheral surface of the brake drum 15 is formed from a soft-magnetic sheet having a thickness of about 0.4 to 1.0 mm, and coupled to the conical surface 31 of the outer tubular portion 6a and an outer peripheral edge of the end wall 6d by means of a plurality of bolts 12. To accomplish this, a conical portion placed on the conical surface 31 is formed on the left end portion of the tubular element 14, while a radially and inwardly projecting annular plate portion placed on the end wall 6d is formed on the right end portion thereof.

A magnet supporting tube 9 having substantially the same wall thickness as that of the brake drum 15 is accommodated in the hollow portion 20 of the guide tube B. The magnet supporting tube 9 is fitted axially slidably over the inner tubular portion 6c, and a number of magnets 8 are coupled to the outer peripheral surface at equal intervals in a peripheral direction. The magnets 8 are provided with magnetic poles on the outer surface opposed to the inner peripheral surface of the brake drum 15 via the tubular element 14 and the inner surface coupled to the magnet supporting tube 9 formed of a ferromagnetic material such as iron, polarities of the magnetic poles opposed to the inner peripheral surface of the brake drum 15 being disposed so as to be alternately different in a peripheral direction.

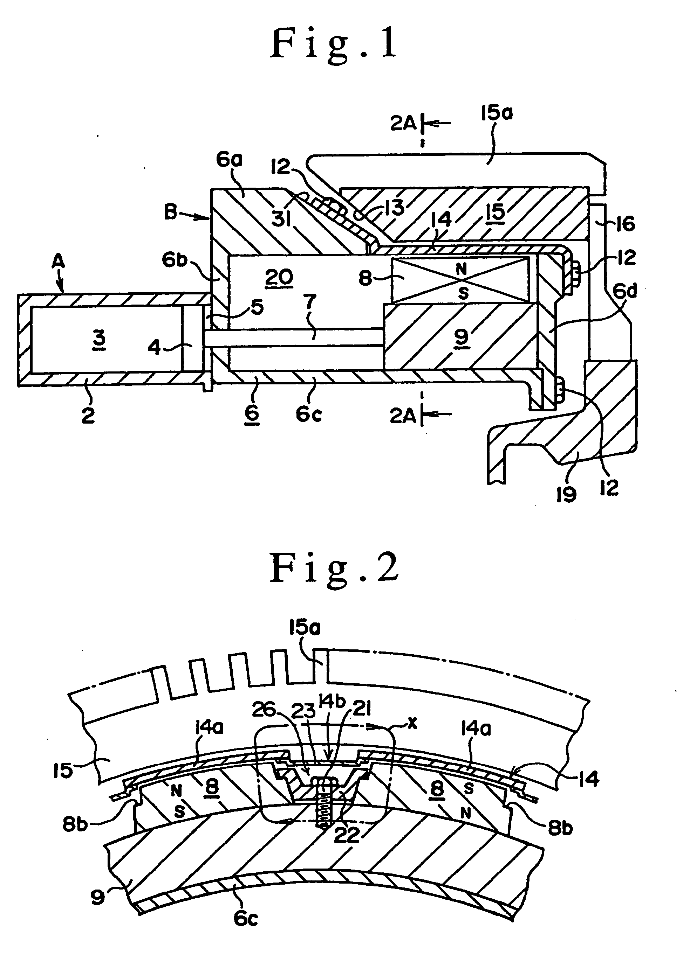

In order to drive the magnet supporting tube 9 to a brake position shown in FIG. 1 projected into the brake drum 15 and a non-brake position at which the magnet supporting tube 9 is moved away from the brake drum 15 into contact with the end wall 6b, cylinders 2 of a plurality (preferably, three) of actuators 'A' are coupled to the end wall 6b. The actuator 'A' is provided with a piston 4 fitted into the cylinder 2 to define a chamber 3 and a chamber 5, and the magnet supporting tube 9 is coupled to a rod 7 projecting into the hollow portion 20 through the end wall 6b from the piston 4.

As shown in FIG. 2, each magnet 8 is in the form of a block, and is secured to the magnet supporting tube 9 by means of a fitting 22 in the shape of U in section and a bolt 21. Specifically, the fitting 22 is placed on shoulders 8b formed on peripheral ends of the magnets 8 peripherally adjacent to each other, and is fastened to the magnet supporting tube 9 by means of a plurality of bolts 21.

In braking, the magnet supporting tube 9 is urged by the actuator A to a position at which the magnets 8 are faced against to the inner peripheral surface of the brake drum 15. At this time, the magnets 8 exert magnetic fields to the brake drum 15 via the thin tubular element 14 to form magnetic circuits x between the brake drum 15 and the magnet supporting tube 9 as shown in FIG. 2. When the rotating brake drum 15 crosses the magnetic fields, eddy currents flow in the interior (wall portion) of the brake drum 15 to generate a brake torque.

In releasing the brake, when a pressure fluid is supplied to the chamber 5 of the actuator A and a pressure fluid of the chamber 3 is released outside, the magnet supporting tube 9 is pulled leftward by the piston 4 till the former comes in contact with the end wall 6b. The magnets 8 are withdrawn from the interior of the brake drum 15 to form magnetic circuits between the outer tubular portion 6a of the guide tube B and the magnet supporting tube 9, not exerting the magnetic field on the brake drum 15.

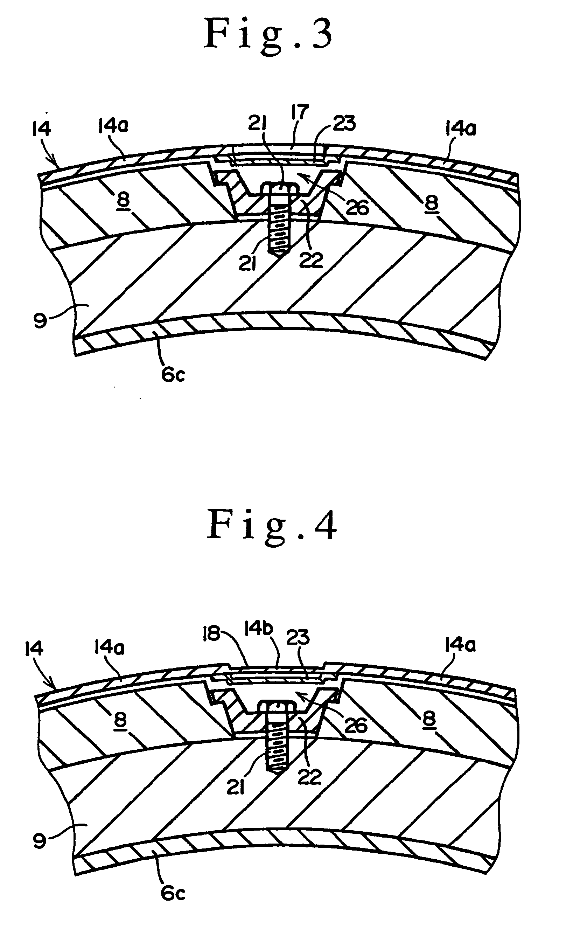

As shown in FIG. 2, in the present invention, for preventing a short-circuiting magnetic flux leakage from occurrence between the magnets, not contributing to the brake torque through a portion 14b on the tubular element 14 covering a space 26 between the magnets 8, the wall thickness or the plate thickness of the portions 14b (see FIG. 4) covering the space 26 between the magnets are made thinner than, or cut, that of portions 14a covering the outer surface of the magnets 8, and each thinned or cut portion 14b is reinforced by a non-magnetic reinforcing plate 23.

In the embodiment shown in FIG. 2, the portions 14a on the tubular element 14 covering the outer surface of the magnets 8 and the portions 14b covering the space 26 between the magnets 8 are separated. That is, each portion 14b is constituted such that the sheet formed of a non-magnetic material such as aluminum, stainless steel or the like is bent into a U-shape in section and the opposite edges of the portion 14b are placed on the inner surface of the portions 14a and then coupled by welding or the like to form a tubular element as a whole.

In the embodiment shown in FIG. 3, for facilitating formation of the tubular element 14 of the guide tube B, a number of rectangular openings 17 are peripherally provided at equal intervals on the soft-magnetic tubular element 14, and the peripheral edge portion of a reinforcing plate 23 formed of a non-magnetic material such as aluminum, stainless steel or the like is placed on and coupled to the inner surface of the tubular element 14 so as to close the opening 17. In this case, preferably, the portion closing the openings 17 is somewhat projected, in wardly of the peripheral edge of the reinforcing plate 23, toward the central part of the brake drum 15 to form a depression. In this way, each reinforcing plate 23 closing the openings 17 is projected into the space 26 between the magnets 8 relative to the portions 14b covering the outer surface of the magnets 8.

In the embodiment shown in FIG. 4, with respect to the thin tubular element 14 on the guide tube B formed of a soft-magnetic material such as steel, the plate thickness of the portion 14b covering the space 26 between the magnets is made thinner than that of the portion 14a covering the outer surface of the magnets 8. In this case, a groove 18 extending in an axial direction of the brake drum 15 is provided in the outer peripheral surface of the tubular element 14 to thereby make the plate thickness thin, and the opposite side edges of the reinforcing plate 23 in the shape of U in section formed of a non-magnetic material such as aluminum, stainless steel or the like are placed on the inner surface of the tubular element 14 and then coupled by welding or the like.

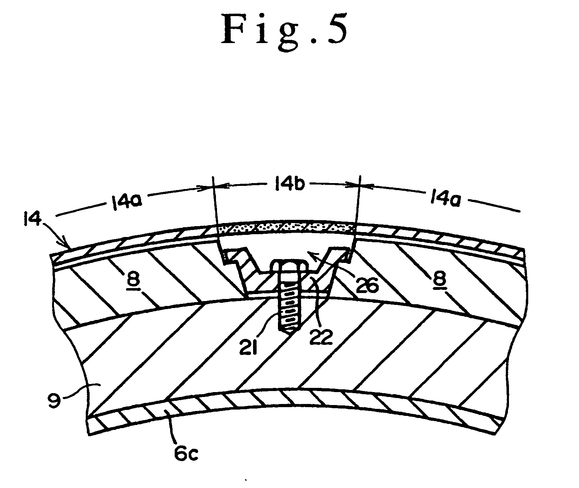

Another solution similar to JP 10098867, is shown in FIG. 5, the whole tubular element 14 on the guide tube B is constituted of a soft-magnetic material such as iron having an even wall thickness, a sheet (not shown) such as nickel is placed on the portion 14b covering the space 26 between the magnets 8, the superposed portion of the sheets on the tubular element 14 is heated to a temperature of 1,000° C or more to alloy nickel or the like with iron (nickel is diffused into iron), and the portion 14b covering the space 26 between the magnets 8 is formed to have the tissue of austenite. Alternatively, nickel plating is applied in advance to the portion 14b on the tubular element 14 covering the space 26 between the magnets, nickel is alloyed with iron by heat treatment, and the portion 14b on the tubular element 14 can be made to have the tissue of austenite. According to this embodiment, it is easy to mold the tubular element 14 on the guide tube B, and by mere application of heat treatment, the portion 14b covering the outer surface of the magnets 8 can be made into a ferromagnetic substance, while the tissue of the portion 14b covering the space 26 between the magnets 8 can be made into austenite to provide a non-magnetic substance.

Alternatively, the tubular element 14 on the guide tube B is formed of an austenite stainless steel (a non-magnetic material), and only the portion covering the outer surface of the magnets 8 of the tubular element 14 may be hammered to change it into the tissue of martensite, that is, a magnetic substance.

Various methods are described above, the portions 14a covering the outer surfaces of the magnets 8 of the tubular element 14 on the guide tube B are made into a magnetic substance, and the portions 14b covering the spaces 26 between the magnets 8 are made into a non-magnetic substance. However, the magnetic properties (particularly, permeability) of these portions 14a and 14b are relative, so that the portions 14a covering the outer surfaces of the magnets 8 may not be a complete magnetic substance, and the portions 14b covering the spaces 26 between the magnets may not be a completely non-magnetic substance. Therefore, they can be freely selected in terms of cost of processing and brake performance, and the brake performance can be enhanced by suppressing the leakage of magnetic flux.

While in the above-described embodiments, a description has been made of the construction of the tubular element 14 on the guide tube B for protecting the magnets 8, it is to be noted that copper plating can be applied to the inner peripheral surface of the brake drum 15 in place of the tubular element 14, or a breezer can be mounted within the guide tube B to lower the temperature.

Here, the ferromagnetic plates (pole pieces) for protecting the magnets 8 to induce the magnetic field are abolished, and the thin tubular element 14 is disposed on the portion of the guide tube B opposed to the inner peripheral surface of the brake drum 15 so that the magnets 8 come considerably closer to the inner peripheral surface of the brake drum 15 as compared with prior art to thereby obtain a powerful brake force. In other words, even if the radius of the brake drum 15 is smaller by a thickness of the ferromagnetic plate than the conventional eddy current reduction apparatus, a sufficient brake force is obtained to enable mounting of the eddy current reduction apparatus on small vehicles.

The portions 14a covering the outer surfaces of the magnets 8 may not be a completely magnetic substance but a soft-magnetic substance, and the portions 14b covering the spaces 26 between the magnets 8 may not be a completely non-magnetic substance but a substance through which magnetism passes to some extent. If the tubular element 14 is extremely thin, or the magnets 8 are greatly separated from each other, the material of the portions 14a covering the outer surfaces of the magnets 8 may be the same as that of the portions 14b covering the spaces 26 between the magnets 8. The degree of difference in magnetic properties between the portions 14a covering the outer surfaces of the magnets 8 and the portions 14b covering the spaces 26 between the magnets 8 can be freely selected taking cost of processing and brake performance into account.

According to the present invention, the whole outer portion or tubular element on the guide tube opposed to the inner peripheral surface of the brake drum is formed from a soft-magnetic sheet, and the portions covering the outer surfaces of the magnets are made into a ferromagnetic substance, while the portions covering the spaces between the magnets are made into a non-magnetic substance by the various methods as described above. Therefore, magnets come close to the inner peripheral surface of the brake drum to suppress a leakage of magnetic flux, to intensify the magnetic fields which the magnets exert on the brake drum and to thus obtain a great brake force, enabling miniaturization and reduction in weight of the guide tube and reduction in cost of manufacture.

If copper plating or the like is applied to the inner peripheral surface of the brake drum in place of the tubular element, greater effects can be obtained.

Obviously, many modifications and variations of the present invention are possible in the light of the above teachings. It is to be understood, therefore, that the invention can be practiced otherwise than as specifically described, and is defined only by the appended claims.

| | |
|---|---|
| A:actuator | 21:bolt |
| B:guide tube | 22:fitting |
| 2:cylinder | 23:reinforcing plate |
| 4:piston | 26:space |
| 6:main body | 31:conical surface |
| 6a:outer tubular portion | |
| 6b:end wall | |
| 6c : inner tubular portion | |
| 6d:end wall | |
| 7:rod | |
| 8:permanent magnet | |
| 8b:shoulder | |
| 9: magnet supporting tube | |
| 12:bolt | |
| 13:conical portion | |
| 14: tubular element | |
| 14a: portion | |
| 14b: portion | |
| 15:brake drum | |
| 15a: cooling fin | |
| 16:spoke | |
| 17:opening | |
| 18:axial groove | |
| 19:flange | |
| 20:hollow portion | |

## Claims

1. A permanent magnet type eddy current reduction apparatus comprising a brake drum (15) coupled to a rotational shaft, a guide tube (B) having a hollow portion (20) of rectangular in section, one end of said guide tube (B) being secured to a vehicle body, the other end of said guide tube (B) being projected into the brake drum (15), and a magnet supporting tube (9) axially movably supported on the hollow portion of said guide tube (B) and having a number of magnets (8) coupled to an outer peripheral surface at equal intervals with spaces (26) there between, **characterised in that** a tubular element (14) on said guide tube (B) opposed to an inner peripheral surface of said brake drum (15) is formed by a weak-magnetic material sheet, and that the thickness of the portion (14b) covering said space (26) between said magnets (B) of the tubular element (14) on said guide tube (B) is thinner than that of the portion (14a) covering the outer surface of said magnets (8).

2. The permanent magnet type eddy current reduction apparatus according to claim 1, wherein a non-magnetic reinforcing plate (23) is fastened to the portion covering said space (26) between said magnets (8) of the tubular element on said guide tube (B).

## Patentansprüche

1. Permanentmagneterregte Wirbelstrombremse, welche eine Bremstrommel (15) aufweist, die mit einer Drehwelle gekoppelt ist, ferner ein Führungsrohr (B) mit einem hohlen Abschnitt (20) mit rechteckigem Querschnitt, wobei ein Ende des Führungsrohres (B) an einer Fahrzeugkarosserie befestigt ist und das andere Ende des Führungsrohres (B) in die Bremstrommel (15) vorsteht, und ein Magnettragerohr (9), das axial beweglich auf dem hohlen Abschnitt des Führungsrohres (B) abgestützt ist und eine Anzahl von Magneten aufweist, welche mit einer außenliegenden Umfangsfläche in gleichen Abständen mit dazwischenliegenden Freiräumen (26) gekoppelt sind, **dadurch gekennzeichnet, daß** ein rohrförmiges Teil (14) auf dem Führungsrohr (B), das einer innenliegenden Umfangsfläche der Bremstrommel (15) gegenüberliegt, aus einem Blech aus weichmagnetischem Werkstoff gebildet ist und daß die Stärke des Abschnitts (14b), welcher den freien Raum (26) zwischen den Magneten (8) des rohrförmigen Teils (14) auf dem Führungsrohr (B) dünner ist als die Stärke des Abschnitts (14a), welcher die außenliegende Fläche der Magneten (8) überdeckt.

2. Permanentmagneterregte Wirbelstrombremse nach Anspruch 1, bei welcher eine Platte (23) aus nichtmagnetischem Werkstoff an dem Abschnitt befestigt ist, welcher den freien Raum (26) zwischen den Magneten (8) des rohrförmigen Teils auf dem Führungsrohr (B) überdeckt.

## Revendications

1. Appareil de réduction de courant de Foucault de type aimant permanent comprenant un tambour de frein (15) couplé à un arbre rotatif, un tube de guidage (B) comportant une portion creuse (20) de section rectangulaire, une extrémité dudit tube de guidage (B) étant fixée à une carrosserie de véhicule, l'autre extrémité dudit tube de guidage (B) faisant saillie dans le tambour de frein (15), et un tube de support d'aimant (9) supporté de manière axialement mobile sur la portion creuse dudit tube de guidage (B) et comportant un nombre d'aimants (8) couplés à une surface périphérique externe à des intervalles égaux avec des espaces (26) entre eux, **caractérisé en ce qu'**un élément tubulaire (14) sur ledit tube de guidage (B) opposé à une surface périphérique interne dudit tambour de frein (15) est formé d'une feuille de matériau faiblement magnétique, et **en ce que** l'épaisseur de la portion (14b) couvrant ledit espace (26) entre lesdits aimants (8) de l'élément tubulaire (14) sur ledit tube de guidage (B) est plus mince que celle de la portion (14a) couvrant la surface externe desdits aimants (8).

2. Appareil de réduction de courant de Foucault de type aimant permanent selon la revendication 1, dans lequel une plaque de renforcement non magnétique (23) est fixée à la portion couvrant ledit espace (26) entre lesdits aimants (8) de l'élément tubulaire sur ledit tube de guidage (B).
